# FASCICULE DE BREVET EUROPEEN

(11) **EP 2 308 720 B1**
(45) Date de publication et mention de la délivrance du brevet: **23.07.2014**
(21) Numéro de dépôt: 10186949.3
(22) Date de dépôt: 08.10.2010
(51) Int. Cl.: B60Q 1/068

(54) **Dispositif de réglage d'un dispositif d'éclairage et / ou de signalisation d'un véhicule automobile et procédé de montage d'un tel dispositif**
Vorrichtung zur Verstellung einer Beleuchtungs- und/oder Signalisierungsvorrichtung eines Kraftfahrzeugs, und Montageverfahren einer solchen Vorrichtung
Device for adjusting a lighting and/or signalling device of an automobile and method for installing such a device

(30) Priorité: 12.10.2009 FR 0957103
(43) Date de publication de la demande: 13.04.2011
(73) Titulaire: Valeo Vision, 93012 Bobigny (FR)
(72) Inventeur: Herbin, Cyril, 59530 Potelle (FR); Maliar, Rémi, 59880 Saint Saulve (FR); Simmet, Nicolas, 59650 Villeneuve d'Ascq (FR); Grebert, Olivier, 59790 Ronchin (FR)

(56) Documents cités:
- EP-A2- 1 873 445
- WO-A1-2009/076438
- DE-A1-102005 037 074

## Description

La présente invention se rapporte à un dispositif de réglage de la position d'une première partie d'un dispositif d'éclairage et/ou de signalisation d'un véhicule automobile par rapport à une deuxième partie. Elle porte également sur un dispositif d'éclairage et/ou de signalisation comprenant un tel dispositif de réglage. Elle porte encore sur un véhicule équipé d'un tel dispositif d'éclairage et/ou de signalisation. Elle porte enfin sur un procédé de montage d'un tel dispositif de réglage.

Il est habituellement prévu de procéder au montage d'un tel dispositif en prévoyant des aménagements appropriés sur lesdites parties fixe et mobile du dispositif d'éclairage et/ou de signalisation lors de leur fabrication, ces aménagements coopérant avec une vis montée ultérieurement, pour compléter le dispositif.

On connaît, par exemple de la demande EP 580 496, un dispositif de réglage de l'orientation d'une partie mobile d'un projecteur de véhicule automobile. Le dispositif de réglage permet de régler la position d'une partie mobile d'un projecteur de véhicule automobile par rapport à une partie fixe. Ce dispositif de réglage comprend une vis comportant une rotule engagée dans un siège relié à l'une des parties et un filetage en prise avec un taraudage relié à l'autre partie. Le siège de rotule et le taraudage sont prévus respectivement sur deux éléments comportant chacun des moyens de montage par simple mouvement relatif sur des moyens de montage homologues prévus sur lesdites parties respectives.

Si les moyens de montage par simple mouvement relatif permettent de simplifier le montage du projecteur et de simplifier la structure du projecteur, ce montage et cette structure restent relativement complexes. Notamment, un tel projecteur nécessite un écrou destiné à coopérer avec une vis et devant être monté sur l'une des parties, et le montage d'un tel projecteur nécessite une étape de vissage de la vis dans l'écrou pour régler la position de la partie mobile par rapport à la partie fixe, cette étape permettant de régler la coupure du projecteur. La structure d'un tel projecteur et cette étape de vissage sont générateurs de coûts.

Un dispositif de réglage selon le préambule de la revendication 1 est connu du document DE 10 2005 037 074 A1.

Le but de l'invention est de fournir un dispositif de réglage et un procédé de montage permettant de remédier au problème évoqué précédemment et améliorant les dispositifs de réglage et les procédés de montage connus de l'art antérieur. En particulier, l'invention propose de réduire la complexité et le coût de production d'un dispositif d'éclairage et/ou de signalisation. Notamment, l'invention propose un dispositif de réglage ayant une structure simple et un procédé de montage simplifié d'un tel dispositif de réglage.

L' objet de l'invention est un dispositif qui permet de régler la position d'une première partie d'un dispositif d'éclairage et/ou de signalisation d'un véhicule automobile par rapport à une deuxième partie du dispositif d'éclairage et/ou de signalisation selon les caratéristiques de la revendication 1.

Un tel dispositif présente une structure simplifiée exempte de tout écrou.

La liaison pivot glissant peut par exemple comprendre un arceau réalisé sur la deuxième partie. Un tel arceau permet d'assurer une bonne reprise des efforts radiaux exercés par la conformation sur la vis.

La liaison mécanique entre la vis et la première partie est du type ponctuelle ou linéaire annulaire ou rotule. Cela permet notamment de permettre une liberté de mouvement de la première partie par rapport à la deuxième partie, notamment de permettre une rotation de la première partie par rapport à un axe de rotation. La liaison mécanique comprend de préférence une fourchette réalisée sur la première partie et au moins deux portions au moins sensiblement en troncs de sphères ou au moins sensiblement tronconiques sur la vis. Une telle structure permet de réaliser une liaison rotule à moindre coût.

La première partie ou la deuxième partie peuvent par exemple comprendre au moins un réflecteur du dispositif d'éclairage et/ou de signalisation.

Selon une variante de réalisation :- la première partie comprend au moins un réflecteur du dispositif et la deuxième partie comprend une partie de support du réflecteur, ou - la deuxième partie comprend au moins un réflecteur du dispositif d'éclairage et/ou de signalisation et la première partie comprend une partie de support du réflecteur.

La partie de support peut supporter le réflecteur de manière directe ou indirecte. Par exemple, le dispositif d'éclairage et/ou de signalisation peut comprendre un boîtier fermé par une glace de fermeture transparente. Le boîtier contient alors un réflecteur associé à une source de lumière. Ce réflecteur est supporté à l'intérieur du boîtier par la partie de support solidaire du boîtier. La partie de support peut par exemple être fixée au boîtier. Selon une autre variante de réalisation, la partie de support supporte le boîtier lui-même à l'intérieur duquel est logé le réflecteur, et supporte donc indirectement le réflecteur, la partie de support pouvant alors être destinée à être fixée à une structure d'un véhicule automobile. Il existe également des variantes de réalisation où le réflecteur et le boîtier sont une seule et même pièce, une surface intérieure du boîtier étant formée et aluminée pour assurer la fonction de réflecteur.

La première partie peut être mobile par rapport à la deuxième partie en rotation autour d'un deuxième axe, de préférence au moins sensiblement orthogonal au premier axe. Il s'agit d'un moyen simple de conversion de la composante de translation du mouvement de la vis en mouvement de rotation de la première partie.

Selon une variante de réalisation, la première partie est articulée en rotation sur la deuxième partie. Par exemple, la deuxième partie comprend un premier moyen d'articulation destiné à coopérer avec un deuxième moyen d'articulation prévu sur la première partie.

Le dispositif de réglage peut comprendre des moyens de prépositionnement du montage de la première partie sur la deuxième partie. Ces moyens permettent de fiabiliser et de sécuriser le montage en évitant des séparations intempestives des parties fixe et mobile lors des étapes de montage.

La conformation peut s'étendre entre 45 degrés et 180° degrés autour du premier axe, de préférence 180°.

Selon l'invention, le dispositif d'éclairage et/ou de signalisation d'un véhicule automobile comprend un dispositif de réglage défini précédemment.

Selon l'invention, le véhicule automobile comprend un dispositif d'éclairage et/ ou de signalisation défini précédemment.

Selon l'invention, le procédé de montage d'un dispositif de réglage défini précédemment comprend les étapes suivantes :
- positionnement de la vis longitudinalement selon le premier axe par rapport à la deuxième partie, puis
- clippage de la vis sur la deuxième partie
- après clippage de la vis, une étape de fixation de la première partie sur la vis.

Un tel procédé de montage est exempt de toute étape de vissage de la vis dans un écrou, ce qui permet de simplifier le procédé et de rendre moins onéreuse son exécution.

L'étape de positionnement de la vis peut comprendre une sous-étape de mise en place d'une butée et une sous-étape de déplacement de la vis jusqu'à son contact contre la butée. Cette sous-étape permet d'effectuer un réglage simple et rapide de la position de la première partie par rapport à la deuxième partie lors du montage.

L'étape de clippage peut être réalisée par translation de la vis selon un axe au moins sensiblement perpendiculaire au premier axe ou par rotation de la vis selon un axe perpendiculaire au premier axe.

L'étape de fixation peut comprendre un clippage de la vis sur la première partie et un clippage de la première partie sur la deuxième partie. Le montage de la vis sur la première partie par clippage est rapide et simple. Le montage de la première partie sur la deuxième partie par clippage est rapide et simple.

Un pré-clippage de la vis sur la première partie peut intervenir avant le clippage de la première partie sur la deuxième partie et le clippage final de la vis sur la première partie. Cette étape permet de fiabiliser et de sécuriser le montage en évitant des séparations intempestives des parties fixe et mobile lors des étapes de montage.

Le dessin annexé représente, à titre d'exemple, un mode de réalisation d'un dispositif d'éclairage et/ou de signalisation pour véhicule automobile selon l'invention.
La figure 1 est une vue éclatée en perspective d'un mode de réalisation d'un dispositif d'éclairage et/ou de signalisation selon l'invention.
La figure 2 est une vue avant en perspective du mode de réalisation du dispositif d'éclairage et/ou de signalisation selon l'invention.
La figure 3 est une vue arrière en perspective du mode de réalisation du dispositif d'éclairage et/ou de signalisation selon l'invention.
La figure 4 est une vue d'une première étape de montage du mode de réalisation du dispositif d'éclairage et/ou de signalisation selon l'invention.
La figure 5 est une vue d'une deuxième étape de montage du mode de réalisation du dispositif d'éclairage et/ou de signalisation selon l'invention.
La figure 6 est une vue d'une troisième étape de montage du mode de réalisation du dispositif d'éclairage et/ou de signalisation selon l'invention.
La figure 7 est une vue d'une quatrième étape de montage du mode de réalisation du dispositif d'éclairage et/ou de signalisation selon l'invention.
La figure 8 est une section partielle du mode de réalisation du dispositif d'éclairage et/ou de signalisation selon l'invention dans un plan passant par l'axe X et parallèle au plan de représentation des figures 6 et 7. La figure 9 est une section partielle du mode de réalisation du dispositif d'éclairage et/ou de signalisation selon l'invention dans le plan IX-IX de la figure 7.

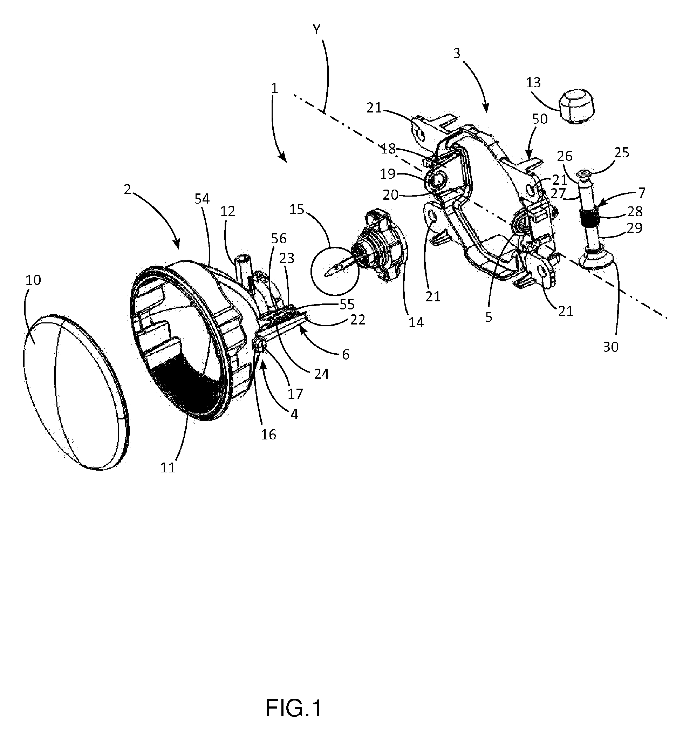

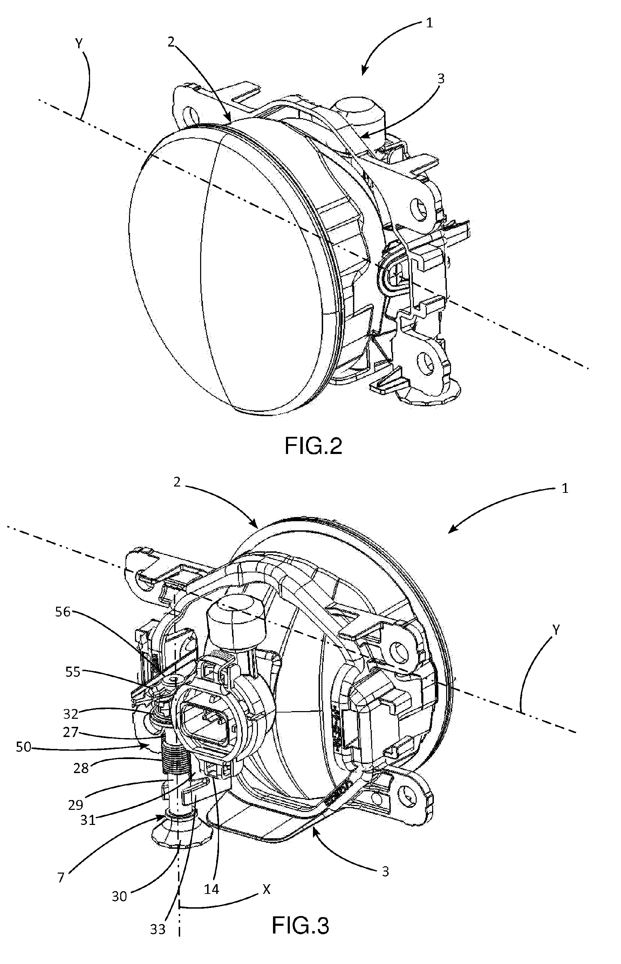

Le dispositif 50 de réglage, représenté aux figures 1 à 3, est destiné à permettre le réglage de la position d'une première partie 2 d'un dispositif 1 d'éclairage et/ou de signalisation par rapport à une deuxième partie 3 du dispositif d'éclairage et/ou de signalisation. Le dispositif de réglage peut comprendre la première partie et/ou la deuxième partie.

Le dispositif de réglage comprend :- une vis 7, - un élément 6 en liaison mécanique avec la vis et en liaison mécanique avec la première partie, et - une conformation 51 en liaison hélicoïdale avec la vis et en liaison mécanique avec la deuxième partie.

La liaison hélicoïdale est assurée par :- une liaison pivot glissant liant la vis à la deuxième partie la liaison pivot glissant comprenant un clippage de la vis dans un alésage 52 ayant une ouverture 53 selon un premier axe X et - la conformation 51 réalisée sur la deuxième partie sur la première partie et coopérant avec des filets 28 de la vis.

De préférence, comme représenté sur les figures, la liaison pivot glissant est assurée par :
- un arceau 32 présentant une ouverture destinée à laisser passer une première partie cylindrique 27 de la vis et entourant au moins partiellement celle-ci,
- des pattes 33 formant un alésage 52 destiné à recevoir une deuxième partie cylindrique 29 de la vis et entourant au moins partiellement celle-ci, l'alésage présentant une ouverture 53 selon son axe X.

Par la suite, on ne décrit que le mode de réalisation représenté dans lequel la première partie 2 comprend un ensemble incluant un boîtier 54, un réflecteur 11 et une glace 10 du dispositif d'éclairage et/ou de signalisation et la deuxième partie 3 comprend une platine 3 de fixation du dispositif d'éclairage et/ou de signalisation sur la structure du véhicule automobile. Alternativement, la première partie peut être constituée d'un réflecteur mobile par rapport à une source lumineuse ou peut encore comprendre principalement un réflecteur mobile par rapport à une source lumineuse. Néanmoins, une inversion cinématique est tout à fait possible, c'est-à-dire que ce peut être la deuxième partie qui comprend un ensemble incluant un boîtier 54, un réflecteur 11 et une glace 10 du dispositif d'éclairage et/ou de signalisation ou la deuxième partie qui est constituée d'un réflecteur mobile par rapport à une source lumineuse ou la deuxième partie qui comprend principalement un réflecteur mobile par rapport à une source lumineuse.

Le réflecteur et le boîtier peuvent être formés en une seule et même pièce, une surface intérieure du boîtier 54 étant formée et aluminée pour assurer la fonction de réflecteur 11.

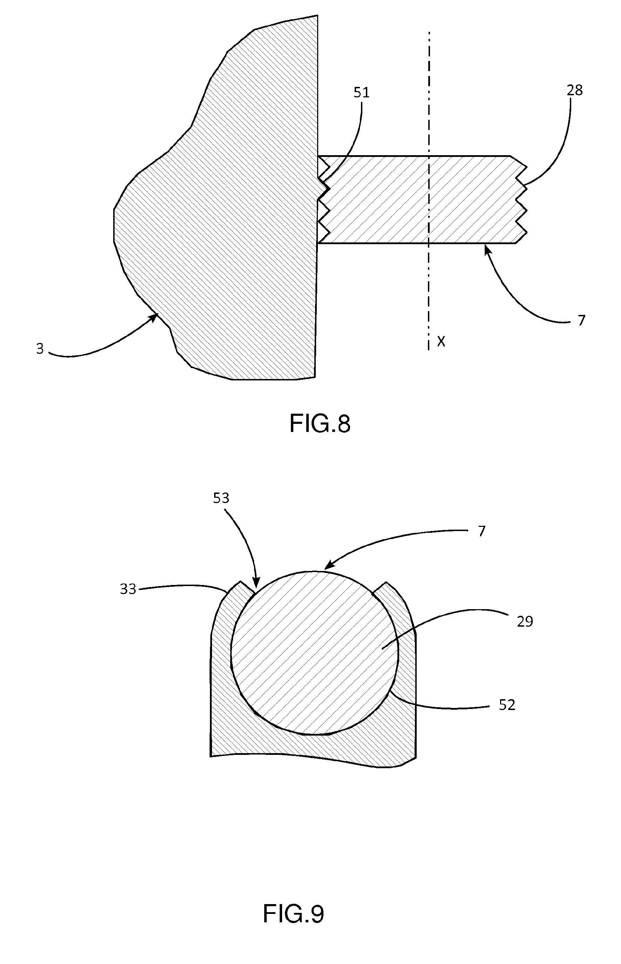

Comme représenté à la figure 9, les pattes 33 sont réalisées en matériau élastique, par exemple en matériau synthétique (matière plastique), de sorte que la partie cylindrique 29 de la vis puisse être clippée dans l'alésage 52 au travers de l'ouverture 53 par déformation des pattes 33.

De préférence, les première et deuxième parties cylindriques sont disposées sur la vis de part et d'autre d'une portion filetée 28.

Dans une première variante non représentée, il est possible de se passer de l'arceau 32.

Dans une deuxième variante non représentée, il est possible que l'alésage 52 soit réalisé au niveau de la portion filetée 28, les sommets des filets de la vis portant alors sur l'alésage.

Par liaison pivot glissant entre une première pièce et une deuxième pièce, on entend que les degrés de liberté cinématique entre les deux pièces sont limités à la translation de la première pièce par rapport à la deuxième pièce selon un axe et à la rotation de la première pièce par rapport à la deuxième pièce selon ce même axe.

De préférence, comme représenté à la figure 8, la conformation comprend une saillie 51, notamment une saillie à section triangulaire, venant dans un creux de la portion filetée 28 de la vis.

Dans une variante non représentée, la conformation comprend plusieurs saillies sur la deuxième partie 3, notamment plusieurs saillies à section triangulaire, disposées à intervalles réguliers correspondant au pas de la vis selon l'axe X.

De préférence, s'étend de préférence entre 45 degrés et 180° degrés autour du premier axe. La conformation s'étend autour de l'axe X d'un angle inférieur ou égal à environ 180° de sorte que le clippage de la vis soit possible. Selon une variante de réalisation, la conformation s'étend autour de l'axe X d'un angle égal à environ 180°.

Par exemple, la conformation est réalisée dans une forme en creux 31 réalisé sur la deuxième partie. De préférence, cette forme en creux est une portion d'alésage cylindrique, en particulier un alésage hémicylindrique. Cette forme en creux est disposée entre l'arceau 32 et les pattes 33.

La liaison mécanique entre la vis 7 et la première partie est du type ponctuelle (notamment ponctuelle bilatérale) ou linéaire annulaire ou rotule.

Dans tout ce document, par liaison ponctuelle entre une première pièce et une deuxième pièce, on entend que le seul degré de liberté cinématique interdit entre les deux pièces est la translation de la première pièce par rapport à la deuxième pièce selon un axe. Dans la liaison ponctuelle bilatérale, cette translation est interdite selon les deux sens.

Dans tout ce document, par liaison linéaire annulaire entre une première pièce et une deuxième pièce, on entend que les seuls degrés de liberté cinématique interdits entre les deux pièces sont les translations de la première pièce par rapport à la deuxième pièce selon deux axes orthogonaux.

Dans tout ce document, par liaison rotule entre une première pièce et une deuxième pièce, on entend que les seuls degrés de liberté cinématique autorisés entre les deux pièces sont les rotations de la première pièce par rapport à la deuxième pièce selon trois axes orthogonaux.

Si la première pièce est liée par une liaison pivot à la deuxième pièce et si la deuxième pièce est liée par une liaison hélicoïdale à la vis, les deux derniers types de liaison mentionnés induisent une précontrainte du dispositif.

En pratique, comme représenté sur les figures, on peut réaliser simplement une liaison de type rotule avec jeu entre la vis 7 et la première partie grâce à une fourchette 6 réalisée sur un élément solidaire de la première partie et deux portions au moins sensiblement en troncs de sphères ou au moins sensiblement tronconiques 25 et 26 en vis-à-vis sur la vis 7. La fourchette comprend deux bras 22,23 définissant une ouverture 24 dans laquelle vient se clipper la vis 7 entre les deux portions 25, 26.

Afin d'éviter tout mouvement non désiré de la première partie par rapport à la deuxième partie une fois le réglage de position de la première partie par rapport à la deuxième partie réalisé, il existe un serrage entre la vis et la deuxième partie au niveau de la liaison pivot glissant et/ou un serrage entre la vis et la deuxième partie au niveau de l'interface conformation - portion filetée et/ou au niveau de l'interface vis - élément 6.

La vis 7 comprend également une tête 30 permettant la manoeuvre en rotation de la vis par action manuelle directe ou via un outil d'un opérateur ou par l'action d'un système automatique de manoeuvre.

Grâce à un tel dispositif de réglage, on comprend que, par une action de rotation de la vis 7 autour de l'axe X par rapport à la deuxième partie, on obtient un déplacement en translation de la vis par rapport à cet axe X et, par conséquent, un déplacement de la première partie par rapport à la deuxième partie. Ainsi, il est possible de régler la coupure du dispositif d'éclairage et/ou de signalisation.

On comprend que du fait de la géométrie de la conformation agissant sur les filets de la portion filetée, lors de la rotation de la vis, des actions mécaniques peuvent avoir tendance à éjecter la vis hors de l'alésage 52. Pour limiter cet effet, on positionne l'alésage 52 aussi loin que possible de la conformation.

Le réflecteur et la glace sont de préférence fixés sur le boîtier, de même qu'un porte-ampoule 14 supportant une ampoule 15.

La deuxième partie 3 comprend de préférence une platine de fixation du dispositif d'éclairage et/ou de signalisation à une structure de véhicule automobile. Pour ce faire, la platine comprend par exemple des oreilles munies de perçages 21.

De préférence, la première partie est articulée en rotation sur la deuxième partie. Par exemple, la deuxième partie comprend un premier moyen d'articulation 5 destiné à coopérer avec un deuxième moyen d'articulation 4 prévu sur la première partie.

Le deuxième moyen d'articulation peut comprendre des tourillons 16 et le premier moyen d'articulation peut comprendre des oreilles 18 munies de trous 19 définissant un axe Y et destiné à recevoir les tourillons.

De préférence, les oreilles présentent des faces 20 formant des V pour guider les tourillons vers les trous 19. De préférence encore, les extrémités des tourillons présentent des pentes 17 pour déformer les oreilles 18 en flexion à mesure qu'on approche la première partie de la deuxième partie et ainsi faciliter le clippage des tourillons 16 dans les trous 19.

Par exemple, l'axe Y est au moins sensiblement orthogonal à l'axe X.

Le dispositif de réglage peut comprendre des moyens de prépositionnement du montage ou de pré-clippage de la première partie sur la deuxième partie. Pour ce faire, l'ouverture 24 dans la fourchette 6 est conformée de sorte qu'elle ne puisse être clippée sur la vis alors que les tourillons 16 ne se trouvent pas encore dans les trous 19, mais seulement en appui entre les deux oreilles 18 et les faces 20.

Selon l'invention, un dispositif d'éclairage et/ou de signalisation comprend un dispositif de réglage tel que décrit précédemment. Le dispositif d'éclairage et/ou de signalisation est par exemple un dispositif de projecteur antibrouillard d'un véhicule automobile.

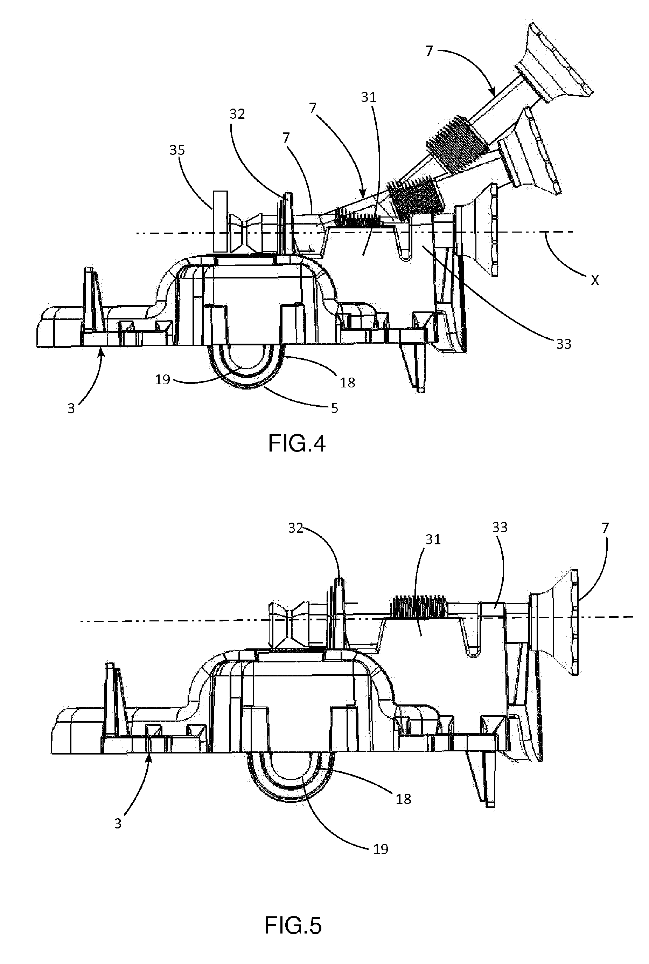

Un mode d'exécution d'un procédé de montage d'un dispositif de réglage selon l'invention est décrit ci-après en référence aux figures 4 à 7.

Dans une première étape représentée à la figure 4, on fournit une deuxième partie 3 et une vis 7 et on positionne longitudinalement la vis selon le premier axe X par rapport à la deuxième partie. Par « on positionne longitudinalement la vis selon le premier axe X par rapport à la deuxième partie », on entend que l'on met la vis dans une position telle qu'un ou plusieurs points de la vis se trouvent à une certaine position selon cet axe X sans toutefois que ce ou ces points se trouvent nécessairement sur l'axe X et sans que la vis se trouve nécessairement orientée selon cet axe X. Par exemple, dans le mode de réalisation représenté, dans la première étape, on fournit une butée 35, cette butée étant positionnée par rapport à la deuxième partie 3 et on amène la vis, par exemple une extrémité de la vis, en contact contre cette butée. Dans cette position représentée à la figure 4, la vis n'est pas orientée selon l'axe X. Ainsi, dans ce mode de réalisation, c'est particulièrement un point de l'extrémité de la vis entrant en contact avec la butée qui est mis en position selon le premier axe X par rapport à la deuxième partie. Pour positionner la vis, on peut déplacer celle-ci librement dans l'arceau 32.

Dans une deuxième étape représentée à la figure 5, on clippe la vis sur la deuxième partie, par exemple par déformation des pattes 33. La butée 35 précédemment utilisée peut alors être effacée. En effet, lors du clippage, les filets de la portion filetée sont entrés en coopération avec la conformation 51, de sorte que la vis ne peut plus être déplacée en translation selon l'axe X par rapport à la deuxième partie que lorsqu'on la manoeuvre en rotation autour de cet axe. Le clippage peut être réalisé par translation de la vis selon un axe au moins sensiblement perpendiculaire à l'axe X ou par rotation de la vis selon un axe perpendiculaire à l'axe X.

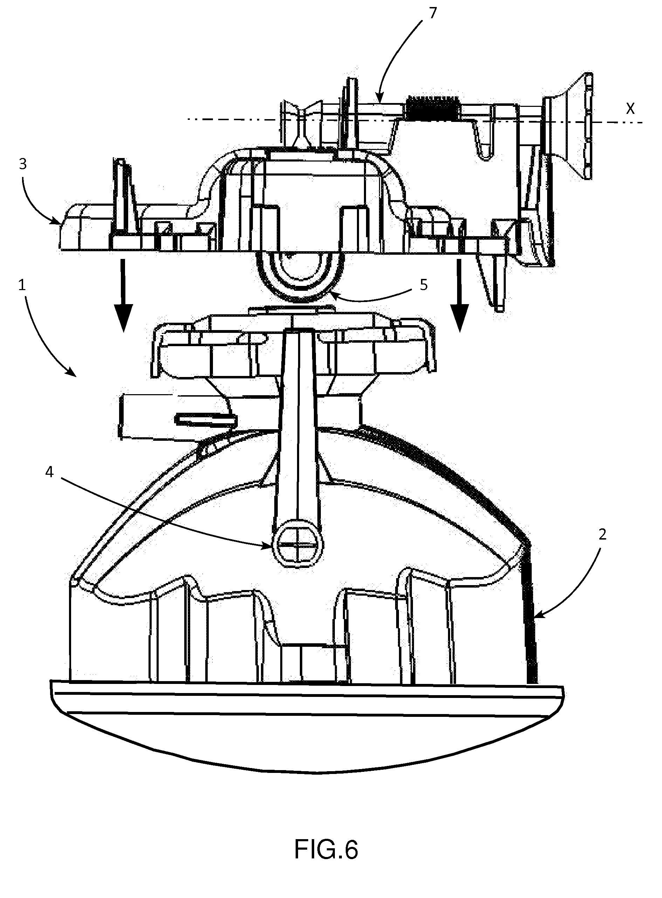

Dans une troisième étape représentée à la figure 6, on effectue une étape de pré-montage ou de pré-clippage de la première partie 2 sur la deuxième partie 3. Pour ce faire, on amène les tourillons 16 de la première partie entre les oreilles 18 de la deuxième partie et les faces 20 réalisées dans ces oreilles et on clippe la vis 7 dans un premier cran 55 réalisé dans l'ouverture 24 de la fourchette 6. Suite à cette étape, la première partie et la deuxième partie sont assemblées l'une à l'autre, mais ne sont pas encore en position d'assemblage fonctionnelle. Cette étape est facultative.

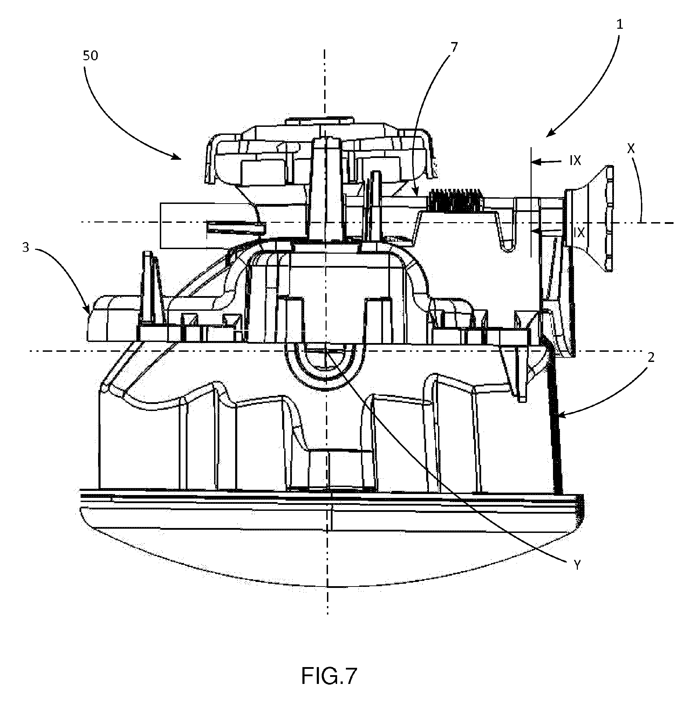

Dans une quatrième étape représentée à la figure 7, on effectue une étape de clippage final de la première partie 2 sur la deuxième partie 3. Pour ce faire, on amène les tourillons 16 de la première partie dans les trous 19 des oreilles 18 de la deuxième partie et on clippe la vis 7 dans un deuxième cran 56 réalisé dans l'ouverture 24 de la fourchette 6. Suite à cette étape, la première partie et la deuxième partie sont assemblées l'une à l'autre et sont en position d'assemblage fonctionnelle.

On comprend que le dispositif de réglage et le procédé de montage selon l'invention présentent plusieurs avantages par rapport aux dispositifs et procédés connus de l'art antérieur. Notamment, le dispositif de réglage selon l'invention ne présente pas d'écrou, ce qui permet de simplifier sa structure et son coût de réalisation. Notamment encore, le procédé de montage selon l'invention permet de simplifier, voire de supprimer, l'étape de positionnement de la première partie par rapport à la deuxième partie, ce qui permet de simplifier le procédé et sont coût de mise en oeuvre. En effet, dans les procédés de montage selon l'art antérieur, il y a une étape de vissage de la vis dans un écrou pour régler la position de la première partie par rapport à la deuxième partie et pour régler, par conséquent, la coupure du dispositif d'éclairage. Dans le procédé de montage selon l'invention, cette étape de vissage est supprimée. Elle est remplacée par une étape de mise en position d'une vis selon un axe, puis par une étape de clippage de la vis dans cette position. En conséquence, grâce à l'invention, la production d'un dispositif de réglage est simplifiée et son coût est réduit.

Dans tout ce document, par « au moins sensiblement parallèle », on entend « parallèle » ou « sensiblement parallèle », par « au moins sensiblement perpendiculaire », on entend « perpendiculaire » ou « sensiblement perpendiculaire », par « au moins sensiblement orthogonal », on entend « orthogonal » ou « sensiblement orthogonal », par « au moins sensiblement tronconique », on entend « tronconique» ou « sensiblement tronconique » et par « au moins en tronc de sphères », on entend « en tronc de sphères » ou « sensiblement en tronc de sphères ».

Dans tout ce document, par liaison pivot glissant entre une première pièce et une deuxième pièce, on entend que les degrés de liberté cinématique entre les deux pièces sont limités à la translation de la première pièce par rapport à la deuxième pièce selon un axe et à la rotation de la première pièce par rapport à la deuxième pièce selon ce même axe, cette rotation et cette translation étant liées entre elles, c'est-à-dire non indépendantes.

## Revendications

1. Dispositif (50) de réglage de la position d'une première partie (2) d'un dispositif d'éclairage et/ou de signalisation (1) d'un véhicule automobile par rapport à une deuxième partie (3) du dispositif d'éclairage et/ou de signalisation, comprenant une vis (7) en liaison mécanique (6, 25, 26) avec la première partie et en liaison hélicoïdale avec la deuxième partie, **caractérisé en ce que** la liaison hélicoïdale comprend :
- une liaison pivot glissant (27, 32, 29, 33) liant la vis à la deuxième partie, la vis étant clippée dans un alésage (52) de la deuxième partie ayant une ouverture (53) selon un premier axe (X) et
- une conformation (51) réalisée sur la deuxième partie et coopérant avec des filets (28) de la vis
et **en ce que** la liaison mécanique entre la vis et la première partie est du type ponctuelle ou linéaire annulaire ou rotule.

2. Dispositif de réglage selon la revendication 1, **caractérisé en ce que** la liaison pivot glissant comprend un arceau (32) réalisé sur la deuxième partie.

3. Dispositif de réglage selon la revendication 1 ou 2, **caractérisé en ce que** la liaison mécanique entre la vis et la première partie comprend une fourchette (6) réalisée sur la première partie et au moins deux portions (25, 26) au moins sensiblement en troncs de sphères ou au moins sensiblement tronconiques sur la vis.

4. Dispositif de réglage selon l'une des revendications précédentes, **caractérisé en ce que** la première partie (2) ou la deuxième partie comprend au moins un réflecteur du dispositif d'éclairage et/ou de signalisation.

5. Dispositif de réglage selon la revendication précédente, **caractérisé en ce que**:
- la première partie (2) comprend au moins un réflecteur du dispositif et la deuxième partie (3) comprend une partie de support du réflecteur, ou
- la deuxième partie comprend au moins un réflecteur du dispositif d'éclairage et/ou de signalisation et la première partie comprend une partie de support du réflecteur.

6. Dispositif de réglage selon l'une des revendications précédentes, **caractérisé en ce que** la première partie est mobile par rapport à la deuxième partie en rotation autour d'un deuxième axe (Y), de préférence au moins sensiblement orthogonal au premier axe (X).

7. Dispositif de réglage selon l'une des revendications précédentes, **caractérisé en ce qu'**il comprend des moyens (17, 20, 55) de prépositionnement du montage de la première partie (2) sur la deuxième partie (3).

8. Dispositif de réglage selon l'une des revendications précédentes, **caractérisé en ce que** la conformation s'étend de préférence entre 45 degrés et 180° degrés autour du premier axe.

9. Dispositif d'éclairage et/ou de signalisation (1) d'un véhicule automobile comprenant un dispositif de réglage (50) selon l'une des revendications précédentes.

10. Procédé de montage d'un dispositif de réglage (50) selon l'une des revendications 1 à 8 sur un dispositif d'éclairage et/ou de signalisation (1) d'un véhicule automobile comportant une première partie (2) pouvant être déplacée par rapport à une deuxième partie (3), comprenant les étapes suivantes :
- positionnement de la vis longitudinalement selon le premier axe par rapport à la deuxième partie, puis
- clippage de la vis sur la deuxième partie
- après clippage de la vis, une étape de fixation de la première partie sur la vis.

11. Procédé de montage selon la revendication précédente, **caractérisé en ce que** l'étape de positionnement de la vis comprend une sous-étape de mise en place d'une butée (35) et une sous-étape de déplacement de la vis jusqu'à son contact contre la butée.

12. Procédé de montage selon la revendication 10 ou 11, **caractérisé en ce que** l'étape de clippage est réalisée par translation de la vis selon un axe au moins sensiblement perpendiculaire au premier axe ou par rotation de la vis selon un axe perpendiculaire au premier axe.

13. Procédé de montage selon l'une des revendications 10 à 12, **caractérisé en ce que** l'étape de fixation comprend un clippage de la vis sur la première partie et un clippage de la première partie sur la deuxième partie.

14. Procédé de montage selon la revendication précédente, **caractérisé en ce qu'**un pré-clippage de la vis sur la première partie intervient avant le clippage de la première partie sur la deuxième partie et le clippage final de la vis sur la première partie.

## Patentansprüche

1. Vorrichtung (50) zum Verstellen der Position eines ersten Teils (2) einer Beleuchtungs- und/oder Signalgebungsvorrichtung (1) eines Kraftfahrzeugs bezüglich eines zweiten Teils (3) der Beleuchtungs- und/oder Signalgebungsvorrichtung, die eine Schraube (7) in mechanischer Verbindung (6, 25, 26) mit dem ersten Teil und in Schraubverbindung mit dem zweiten Teil umfasst,
**dadurch gekennzeichnet, dass** die Schraubverbindung umfasst:
- ein Drehschubgelenk (27, 32, 29, 33), das die Schraube mit dem zweiten Teil verbindet, wobei die Schraube in einer Bohrung (52) des zweiten Teils festgeklipst ist, die eine Öffnung (53) entlang einer ersten Achse (X) aufweist, und
- eine Konformation (51), die an dem zweiten Teil ausgeführt ist und mit Gewinden (28) der Schraube zusammenwirkt,
und dass die mechanische Verbindung zwischen der Schraube und dem ersten Teil von der Art einer Punktverbindung oder einer Punktkurvenverbindung oder einer Kugelgelenkverbindung ist.

2. Verstellvorrichtung nach Anspruch 1,
**dadurch gekennzeichnet, dass** das Drehschubgelenk einen an dem zweiten Teil ausgeführten Bügel (32) aufweist.

3. Verstellvorrichtung nach Anspruch 1 oder 2,
**dadurch gekennzeichnet, dass** die mechanische Verbindung zwischen der Schraube und dem ersten Teil eine an dem ersten Teil ausgeführte Gabel (6) und wenigstens zwei wenigstens im Wesentlichen kugelstumpfartige oder wenigstens im Wesentlichen kegelstumpfartige Abschnitte (25, 26) an der Schraube umfasst.

4. Verstellvorrichtung nach einem der vorhergehenden Ansprüche,
**dadurch gekennzeichnet, dass** der erste Teil (2) oder der zweite Teil wenigstens einen Reflektor der Beleuchtungs- und/oder Signalgebungsvorrichtung aufweist.

5. Verstellvorrichtung nach dem vorhergehenden Anspruch,
**dadurch gekennzeichnet, dass**
- der erste Teil (2) wenigstens einen Reflektor der Vorrichtung umfasst und der zweite Teil (3) ein Teil zum Halten des Reflektors umfasst, oder
- der zweite Teil wenigstens einen Reflektor der Beleuchtungs- und/oder Signalgebungsvorrichtung umfasst und der erste Teil ein Teil zum Halten des Reflektors umfasst.

6. Verstellvorrichtung nach einem der vorhergehenden Ansprüche,
**dadurch gekennzeichnet, dass** der erste Teil bezüglich des zweiten Teils um eine zweite Achse (Y) drehbeweglich ist, die vorzugsweise wenigstens im Wesentlichen orthogonal zur ersten Achse (X) ist.

7. Verstellvorrichtung nach einem der vorhergehenden Ansprüche,
**dadurch gekennzeichnet, dass** sie Mittel (17, 20, 55) zum Vorpositionieren der Montage des ersten Teils (2) an dem zweiten Teil (3) aufweist.

8. Verstellvorrichtung nach einem der vorhergehenden Ansprüche,
**dadurch gekennzeichnet, dass** sich die Konformation vorzugsweise zwischen 45 und 180 Grad um die erste Achse herum erstreckt.

9. Beleuchtungs- und/oder Signalgebungsvorrichtung (1) eines Kraftfahrzeugs mit einer Verstellvorrichtung (50) nach einem der vorhergehenden Ansprüche.

10. Verfahren zur Montage einer Verstellvorrichtung (50) nach einem der Ansprüche 1 bis 8 an einer Beleuchtungs- und/oder Signalgebungsvorrichtung (1) eines Kraftfahrzeugs, mit einem bezüglich eines zweiten Teils (3) verlagerbaren ersten Teil (2), das die folgenden Schritte umfasst:
- Positionieren der Schraube in Längsrichtung entlang der ersten Achse bezüglich des zweiten Teils, dann
- Festklipsen der Schraube an dem zweiten Teil,
- nach Festklipsen der Schraube Befestigen des ersten Teils an der Schraube.

11. Montageverfahren nach dem vorhergehenden Anspruch,
**dadurch gekennzeichnet, dass** das Positionieren der Schraube einen Unterschritt zum Anbringen eines Anschlags (35) und einen Unterschritt zum Verlagern der Schraube bis zu ihrem Kontakt mit dem Anschlag umfasst.

12. Montageverfahren nach Anspruch 10 oder 11,
**dadurch gekennzeichnet, dass** das Festklipsen durch Verschieben der Schraube entlang einer zur ersten Achse wenigstens im Wesentlichen lotrechten Achse oder durch Drehen der Schraube entlang einer zur ersten Achse lotrechten Achse erfolgt.

13. Montageverfahren nach einem der Ansprüche 10 bis 12,
**dadurch gekennzeichnet, dass** der Befestigungsvorgang ein Festklipsen der Schraube an dem ersten Teil und ein Festklipsen des ersten Teils an dem zweiten Teil umfasst.

14. Montageverfahren nach dem vorhergehenden Anspruch,
**dadurch gekennzeichnet, dass** ein Festklipsen der Schraube vorab an dem ersten Teil vor dem Festklipsen des ersten Teils an dem zweiten Teil und des endgültigen Festklipsens der Schraube an dem ersten Teil erfolgt.

## Claims

1. Device (50) for adjusting the position of a first part (2) of a lighting and/or signalling device (1) for a motor vehicle in relation to a second part (3) of the lighting and/or signalling device, comprising a screw (7) mechanically linked (6, 25, 26) to the first part and having a helical link to the second part, **characterised in that** the helical link comprises:
- a sliding pivot link (27, 32, 29, 33) connecting the screw to the second part, the screw being clipped in a bore (52) in the second part with an opening (53) in a first axis (X) and
- an assembly (51) constructed on the second part and acting together with the threads (28) of the screw
and **in that** the mechanical link between the screw and the first part is of the point or linear annular or swivel joint type.

2. Adjustment device according to claim 1, **characterised in that** the sliding pivot connection comprises an arched member (32) constructed on the second part.

3. Adjustment device according to claim 1 or 2, **characterised in that** the mechanical link between the screw and the first part comprises a fork (6) constructed on the first part and at least two portions (25, 26) at least substantially in the form of truncated spheres or less substantially frustoconical on the screw.

4. Adjustment device according to any one of the preceding claims, **characterised in that** the first part (2) or the second part comprises at least one reflector of the lighting and/or signalling device.

5. Adjustment device according to the preceding claim, **characterised in that**:
- the first part (2) comprises at least one reflector of the device and the second part (3) comprises a part supporting the reflector, or
- the second part comprises at least one reflector of the lighting and/or signalling device and the first part comprises a part supporting the reflector.

6. Adjustment device according to any one of the preceding claims, **characterised in that** the first part can move in rotation with respect to the second part about a second axis (Y), preferably at least substantially at right angles to the first axis (X).

7. Adjustment device according to any one of the preceding claims, **characterised in that** it comprises means (17, 20, 55) for pre-positioning assembly of the first part (2) on the second part (3) .

8. Adjustment device according to any one of the preceding claims, **characterised in that** the assembly preferably extends between 45° and 180° about the first axis.

9. Lighting and/or signalling device (1) for a motor vehicle comprising an adjustment device (50) according to any one of the preceding claims.

10. Method for mounting an adjustment device (50) according to any one of claims 1 to 8 on a lighting and/or signalling device (1) of a motor vehicle comprising a first part (2) which can be moved in relation to a second part (3), comprising the following stages:
- positioning the screw longitudinally along the first axis in relation to the second part, then
- clipping the screw onto the second part
- after clipping the screw, the stage of fixing the first part on the screw.

11. Method of assembly according to the preceding claim, **characterised in that** the stage of positioning the screw comprises a sub-stage of fitting a stop (35) and a sub-stage of moving the screw until it comes into contact with the stop.

12. Method of assembly according to claim 10 or 11, **characterised in that** the clipping stage is performed by translational movement of the screw along an axis at least substantially perpendicular to the first axis or by rotation of the screw about an axis perpendicular to the first axis.

13. Method of assembly according to any one of claims 10 to 12, **characterised in that** the fixing stage comprises clipping the screw onto the first part and clipping the first part onto the second part.

14. Method of assembly according to the preceding claim, **characterised in that** pre-clipping of the screw onto the first part takes place before clipping of the first part onto the second part and final clipping of the screw onto the first part.
